# EUROPEAN PATENT APPLICATION

(11) **EP 4 738 297 A1**
(43) Date of publication of application: **06.05.2026**
(21) Application number: 24209636.0
(22) Date of filing: 29.10.2024
(51) Int. Cl.: G07F 15/00, G06Q 20/40

(54) **VEHICLE CHARGING PAYMENT**

(71) Applicant: Mastercard International Incorporated, Purchase, NY 10577 (US)
(72) Inventor: MAIN, Jonathan James, Hook, RG29 1NZ (GB); SMETS, Patrik, 3130 Flemish Brabant (BE)
(74) Representative: Keltie LLP

(57) **Abstract**

A method of payment for charging of a battery of a vehicle is described. A charging connection between the vehicle and a charging station is established. A communication channel between a vehicle payment module of the vehicle and a terminal module of the charging station is established over the charging connection. The method then comprises selecting, at the vehicle, a fleet card for payment and preparing a charging payment transaction, using the fleet card, for authentication. The charging payment transaction is then provided by the vehicle payment module, for authorisation to the terminal module of the charging station. The terminal module then provides the charging payment transaction to a transaction system for authorisation. The method further comprises providing at the vehicle a fleet card data structure for the selected fleet card. The fleet card data structure comprises a set of required data elements and is adapted to hold metadata for each of the required data elements and values for each of the required data elements. The fleet card data structure with the charging payment transaction is then provided by the vehicle to the transaction system for authorisation of the charging payment transaction, where the fleet card data structure is populated at a plurality of transaction stages from a plurality of data sources.

## Description

### TECHNICAL FIELD

The present disclosure relates to systems and methods for payment for vehicle charging.

### BACKGROUND

A developing approach to the charging of electric vehicles (EVs) is the use of EV charging stations associated with a smart grid. Use of a smart grid allows for particularly efficient charging, and for vehicle batteries to be used as sources of electricity for the smart grid in particular situations. ISO 15118 is a set of standards developed to support interaction of an EV with a smart grid for charging. ISO 15118 supports communication between an electric vehicle and a charging station (in this context, more generally identified as "supply equipment") using power line communication - this operates over the charging interface (which may be wired or wireless) and ensures the information exchanged between the vehicle and the charging station, including card payment information, is communicated effectively and maintained securely.

A "plug and charge" model has been developed for charging of electric vehicles once the charging connection is established - this is based on there being a pre-existing service contract, and it allows for automated communication and billing processes between the electric vehicle and the charging station without any need for external identification (e.g., RFID cards, Debit/credit cards or charging apps) once the applicable service contract has been established.

Despite the advantages of the "plug and charge" model, it has significant practical limitations. It is not flexible, and it does not in particular allow for the checks and conditions that can be provided in card payment - such as the incorporation of card specific requirements. Achieving any equivalent result requires significant user action and this largely limits the applicability of this model.

The present disclosure has been devised to mitigate or overcome at least some of the above-mentioned problems with existing approaches to payment for vehicle charging.

### SUMMARY OF THE DISCLOSURE

The present inventors have appreciated that existing methods implemented for payment of vehicle charging sessions having significant limitations when it comes to implementing and enabling payment methods that include restrictions associated with the payment card.

One type of payment card that implements restrictions are fleet cards, which are primarily for the payment of fuel and automotive related purchases. Traditionally, fleet cards have been used for liquid fuel and as the use of electric vehicles expands, the use of these cards now require extension into the electric vehicle charging space. This has proven to be challenging within the existing infrastructure, particularly because fleet cards differ not only include restrictions on the goods and services which may be purchased with the card, but they generally additionally include requirements for additional vehicle or driver related data to support the fleet management.

In 2023, the EMVCo consortium started the development of card-based payment specifications for EV charging (i.e. development of an EMV standard), by which a connection dedicated for card payment communication would co-exist and run on top of the ISO 15118 standard. The present inventors have appreciated that when using such a connection, the interactions between the elements of the charging system could be extended to enable the communication of fleet management data, and the enforcement of purchase restrictions associated with the use of a fleet card, to be implemented in a set of interactions for payment for an electric vehicle charging session.

Therefore, according to a first aspect of the present disclosure provides a method of payment for charging of a battery of a vehicle, the method comprising: establishing a charging connection between the vehicle and a charging station; establishing a communication channel between a vehicle payment module of the vehicle and a terminal module of the charging station over the charging connection; selecting, at the vehicle, a fleet card for payment; preparing a charging payment transaction, using the fleet card, for authentication; providing, by the vehicle payment module, the charging payment transaction for authorisation to the terminal module of the charging station; and providing, by the terminal module, the charging payment transaction to a transaction system for authorisation;
the method further comprising identifying the selected card as a fleet card, providing at the vehicle a fleet card data structure for the selected fleet card, the fleet card data structure comprising a set of required data elements, the fleet card data structure being adapted to hold metadata for each of the required data elements and values for each of the required data elements, and providing the fleet card data structure with the charging payment transaction to the transaction system for authorisation of the charging payment transaction; and populating the fleet card data structure at a plurality of transaction stages from a plurality of data sources.

In this way, use of a fleet card can be integrated very effectively with a charging payment transaction - identification of a selected card as a fleet card can then trigger use of a specific processing path in which a fleet card data structure is developed through the stages of the transaction process and made available when the charging payment transaction is provided to the transaction system for authorisation.

In embodiments populating the fleet card data structure comprises adding to the set of required data elements. Accordingly, different entities of the system may include additional values to be entered in the fleet card data structure for the transaction.

In embodiments, populating the fleet card data structure comprises adding metadata for one or more required data elements, wherein said metadata comprises rules for collection or for use of required data element values.

In an alternative embodiment populating the fleet card data structure comprises adding required data element values.

In yet another embodiment, populating the fleet card data structure comprises, at a transaction stage, adding more than one of required data elements, metadata for required data elements, or required data element values to the fleet card data structure.

In embodiments of the disclosure, wherein the electric vehicle comprises a card data module holding card data for payment cards, and an electric vehicle charging application to control the electric vehicle charging process, wherein one or more of the card data module, the vehicle payment module, and the vehicle charging application populates the fleet card data structure for the transaction. As such the fleet card data structure may be populated at different stages of the transaction process and by different entities.

In embodiments, the method comprises the vehicle payment module requesting card data for eligible payment cards from the card data module, wherein the fleet card is an eligible payment card, the electric vehicle charging application selecting the fleet card for payment from a set of eligible payment cards provided to the electric vehicle charging application by the vehicle payment module. In these implementations, traditional PIX mechanisms may be used to identify a card as a fleet card, or new mechanisms may be used based on discretionary metadata that identifies the card as a fleet card, and its fleet program.

In alternative embodiments, the method further comprises the electric vehicle charging application populating the fleet card data structure on selection of the fleet card. As such the electric vehicle charging application may provide fleet card data values associated with purchasing restriction for the selected fleet card.

In embodiments, the electric vehicle charging application comprises or accesses fleet card rules for the selected fleet card, and wherein the electric vehicle charging application adds to the set of required elements, populates metadata for required data elements, or both according to the fleet card rules.

In yet another embodiment, the electric vehicle charging application communicates with an electric vehicle management system, wherein the electric vehicle charging application populates the fleet card data structure with data received from the electric vehicle management system.

In embodiments, the electric vehicle management system has a driver user interface, and wherein the method further comprises the electric vehicle management system providing data to the electric vehicle charging application for populating the fleet card data structure.

In some implementations, the electric vehicle charging application is in communication with a user application on a user computing device, wherein the electric vehicle charging application populates the fleet card data structure with data received from the user application.

Optionally, the fleet card rules further comprise purchase restrictions, and the electric vehicle charging application provides the fleet card rule purchase restrictions to the vehicle payment module.

In some instances, the method comprises the card data module returning said card data and providing and/or populating the fleet card data structure for the fleet card to the vehicle payment module.

In some implementations, the method further comprises the card data module populating the fleet card data structure with required data elements according to a Connexus fleet card specification.

In some instances, preparing the charging payment transaction for authentication comprises a transaction setup interaction between the vehicle payment module and the terminal module, wherein the vehicle payment module provides the fleet card data structure to the terminal module, and wherein the terminal module populates the fleet card data structure and provides the further populated fleet card data structure to the vehicle payment module.

In some cases, the terminal module comprises or accesses merchant fleet card rules, wherein the terminal module populates the fleet card data structure according to the merchant fleet card rules.

In some cases, on receiving the further populated fleet card data structure, the vehicle payment module forwards the fleet card data structure to the electric vehicle charging application to further populate the fleet card data structure and return it to the vehicle payment module.

In embodiments, before providing the charging payment transaction for authorisation to the terminal module of the charging station, the vehicle payment module requests card authorisation data for the fleet card from the card data module, and provides the fleet card data structure to the card data module with the request.

Optionally, on providing the card authorisation data for the fleet card, the card data module determines from required element metadata whether any required data element is to be encrypted, and if so, the card data module encrypts the relevant required data element and includes it in the fleet card data structure in encrypted form.

In some instances, with the card authorisation data and the fleet card data structure, the card data source module further provides card purchase restrictions.

In some cases, the vehicle payment module combines the card purchase restrictions and the fleet card rule purchase restrictions to obtain transaction purchase restrictions.

In embodiments, on the vehicle payment module providing the charging payment transaction for authorisation to the terminal module of the charging station, the vehicle payment module also provides the fleet card data structure.

Optionally, on the vehicle payment module providing the charging payment transaction for authorisation to the terminal module of the charging station, the vehicle payment module also provides any payment restrictions.

In some instances, on receiving the charging payment transaction from the vehicle payment module and before providing the charging payment transaction to the transaction system for authorisation, the charging station further populates the fleet card data structure.

In some cases, the charging station further comprises a user interface for user input of required data element values.

Optionally, the charging station determines whether the fleet card data structure is compliant with fleet card rules before providing the charging payment transaction for authorisation.

In some cases, the charging station provides the charging payment transaction for authorisation without determining whether the fleet card data structure is compliant with fleet card rules.

In embodiments, the required data element metadata may comprise one or more rules relating to a data source for providing the associated required data element value.

In some instances, the required data element metadata may indicate whether a required data element is mandatory or optional.

Optionally, if a required data element is mandatory, the terminal module does not provide the charging payment transaction for authorisation if there is no associated required data element value in the fleet card data structure.

In a second aspect, the disclosure provides a charging station for charging an electric vehicle, the charging station comprising: a charging means adapted to establish a charging connection with a vehicle; a terminal module adapted to communicate with a vehicle payment module of the vehicle over the charging connection, wherein the terminal module is configured to: receive, from the vehicle payment module, a charging payment transaction for authorisation, wherein the charging payment transaction comprises a fleet card data structure having a set of required data elements for a selected fleet card, the fleet card data structure being adapted to hold metadata for each of the required data elements and values for each of the required data elements; populate the fleet card data structure with one or more of the required data elements; provide, the charging payment transaction and the fleet card data structure to a transaction system for authorisation.

In embodiments, populating the fleet card data structure may comprise adding to the set of required data elements. Populating the fleet card data structure may also comprise populating the metadata for one or more of the required data elements, wherein said metadata comprises rules for collection or use of required data element values. Populating the fleet card data structure may further comprise adding required data element values for one or more of the required data elements.

In embodiments, the terminal module may provide the populated fleet card data structure to the vehicle payment module before the charging payment transaction is received for authorisation. In such an arrangement, the terminal module may comprise or access merchant fleet card rules, wherein the terminal module is adapted to populate the fleet card data structure according to the merchant fleet card rules.

In embodiments, the charging station may further comprise a user interface for user input of required data element values.

In embodiments, the charging station may determine whether the fleet card data structure is compliant with fleet card rules before providing the charging payment transaction for authorisation.

In embodiments, the required data element metadata may comprise one or more rules relating to a data source for providing the associated required data element value.

In embodiments, the required data element metadata may indicate whether a required data element is mandatory or optional. Here, if a required data element is mandatory, the terminal module may not provide the charging payment transaction for authorisation if there is no associated required data element value in the fleet card data structure.

In a third aspect, the disclosure provides an electric vehicle, the electric vehicle comprising: a charging system for a battery of the electric vehicle, wherein the charging system is adapted to establish a charging connection with a charging station; a vehicle payment module adapted to communicate with a terminal module of a charging station over the charging connection; the electric vehicle being configured to: select a card for payment and identify the card as a fleet card; prepare a charging payment transaction using the fleet payment card for authentication; populate fleet card data structure for the selected fleet card, the fleet card data structure comprising a set of required data elements, the fleet card data structure being adapted to hold metadata for each of the required data elements and values for each of the required data elements; and provide, by the vehicle payment module, the charging payment transaction for authorisation to the terminal module of the charging station, wherein the fleet card data structure is provided to the terminal module with the charging payment transaction.

In embodiments, populating the fleet card data structure may comprise adding to the set of required data elements.

In embodiments, the electric vehicle may further comprise: a card data module holding card data for payment cards; and an electric vehicle charging application to control the electric vehicle charging process, wherein one or more of the card data module, the vehicle payment module, and the vehicle charging application populates the fleet card data structure for the transaction. Here, the vehicle payment module may be adapted to request card data for eligible payment cards from the card data module, wherein the fleet card may be an eligible payment card, and wherein the card data module may be adapted to return said card data and further provides the fleet card data structure for the fleet card to the vehicle payment module. Furthermore, the electric vehicle charging application may be adapted to select the fleet card for payment from a set of eligible payment cards provided to the electric vehicle charging application by the vehicle payment module, and wherein the electric vehicle charging application may be further adapted to populate the fleet card data structure on selection of the fleet card. Such an electric vehicle charging application may comprise or be adapted to access fleet card rules, wherein the electric vehicle charging application may be adapted to add to the set of required elements, to populate metadata for required data elements, or both according to the fleet card rules. Such an electric vehicle may further comprise an electric vehicle management system, the electric vehicle charging application being adapted to communicates with the electric vehicle management system, wherein the electric vehicle charging application may also be adapted to populate the fleet card data structure with data received from the electric vehicle management system. Such an electric vehicle management system may have a driver user interface, such that the electric vehicle management system may be adapted to provide data to the electric vehicle charging application for populating the fleet card data structure. Such an electric vehicle management system may be adapted to provide values of the vehicle mileage and vehicle identification to populate the fleet card data structure.

In embodiments, the fleet card rules may further comprise purchase restrictions, and the electric vehicle charging application may be adapted to provide the fleet card rule purchase restrictions to the vehicle payment module.

In embodiments, in preparing the charging payment transaction for authentication the vehicle payment module may be adapted to perform a transaction setup interaction with the terminal module, wherein the vehicle payment module may then be adapted to provide the fleet card data structure to the terminal module, and wherein, in response, the vehicle payment module may be adapted to receive a further populated fleet card data structure from the terminal module. In such a case, on receiving the further populated fleet card data structure, the vehicle payment module may be adapted to forward the fleet card data structure to the electric vehicle charging application, which may also be adapted to further populate the fleet card data structure and return it to the vehicle payment module.

In embodiments, before providing the charging payment transaction for authorisation to the terminal module of the charging station, the vehicle payment module may be adapted to request card authorisation data for the fleet card from the card data module, and to provide the fleet card data structure to the card data module with the request. In such cases, on providing the card authorisation data for the fleet card, the card data module may be adapted to determine from required element metadata whether any required data element is to be encrypted, and if so, the card data module may be further adapted to encrypt the relevant required data element and include it in the fleet card data structure in encrypted form. In such cases, the card data module may be adapted to provide card purchase restrictions to the vehicle payment module with the card authorisation data. Such a vehicle payment module may be adapted to combine the card purchase restrictions and the fleet card rule purchase restrictions (where both exist) to obtain transaction purchase restrictions. Such a vehicle payment module may be adapted also to provide the fleet card data structure on providing the charging payment transaction for authorisation to the terminal module. Such a vehicle payment module may be adapted to provide the charging payment transaction and any payment restrictions to the terminal module for authorisation.

As noted above, this approach has clear benefits in relation to allowing the implementation and enabling the use of payment methods that include restrictions associated with the payment card in vehicle charging sessions by using the charging connection established between the charging station and the electric vehicle during the charging session.

In summary, the disclosure herein related to methods and a system implemented through the charging station for implementing fleet cards - both for purchase restrictions and provision of fleet data - in a plug-and-charge infrastructure, where the data requested to enable the payment transaction of the charging session may be populated from a range of different sources. This provides flexibility, both as to the information requested for implementation of a fleet card and the data collected, as data may be required and provided by a variety of different sources throughout the different stages of the overall transaction process.

### BRIEF DESCRIPTION OF THE DRAWINGS

Figure 1 shows a vehicle charging system in which embodiments of the disclosure can be deployed.
Figure 2 shows a schematic diagram of the architecture for a card payment protocol for EV charging.
Figure 3 shows a flow diagram of the steps for a card payment protocol for EV charging.
Figure 4 shows a schematic representation of the implementation of provision of fleet card information when the source is the fleet card itself, according to embodiments of the disclosure.
Figure 5 shows a method of payment for charging of a battery of a vehicle, according to embodiments of the disclosure.
Figure 6 shows a schematic flow diagram for provisioning of a fleet card to an EV, according to embodiments of the disclosure.
Figure 7 shows a schematic flow diagram for a plug-and-charge transaction in which a fleet card is used for payment, according to embodiments of the disclosure.
Figure 8 shows a continuation of the flow show in Figure 7, indicating the incorporation of fleet card metadata and purchase restrictions in the transaction set up and authorisation data, according to embodiments of the disclosure.
Figure 9 shows a continuation of the flow show in Figure 7, indicating the incorporation of fleet card metadata and purchase restrictions in the transaction flow, according to embodiments of the disclosure.

### DETAILED DESCRIPTION

General and specific embodiments of the disclosure will be described below with reference to the Figures.

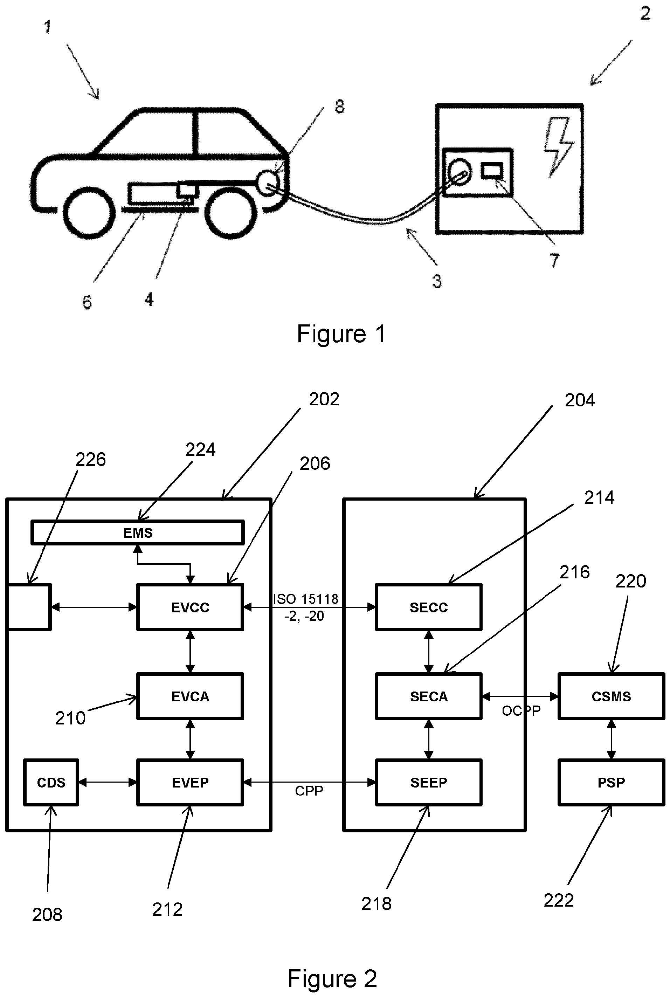

Figure 1 shows a vehicle charging system in which embodiments of the disclosure can be deployed. Vehicle 1 is connected to a charging station (also referred to as "supply equipment") 2, in this case by a charging cable 3 plugged into a charging connector 8 of the vehicle 1 - in other embodiments, charging may be by induction, in which case there will be no cable and the interfaces at the vehicle and the charging station will comprise induction loops. In either case, there is a charging connection established between the vehicle 1 and the charging station 2, and this charging connection can be used for power line networking. The ISO 15118-3 standard establishes requirements for physical layer and data link layer networking over such a charging connection - this can simply be established here for connecting a vehicle charging controller 4 and a supply charging controller 7. The vehicle charging controller 4 controls charging of the vehicle battery 6, while the supply charging controller 7 controls provision of charge to the charging system of the vehicle 1.

In general terms, the ISO 15118 standard is primarily concerned with the management of the charging session. However, before charging starts, the ISO 15118 standard allows for the negotiation of how payment of the charging session will be made. The ISO 15118-2 and 15118-20 standards allow for payment to occur either through what are known as Plug and Charge contracts, or via an external method.

A "plug and charge" model has been developed for charging of electric vehicles once the charging connection is established - this is based on there being a pre-existing service contract. After an authorization interaction in which the supply equipment communication controller (SECC - this will be described further below) of the supply charging controller 7 determines that the EV is associated with a valid contract, charging is carried out and billing takes place offline according to whatever method is established in that contract, in a similar manner to payment for telecoms services, for example.

An external method is any method which is out of band to the method (Plug and Charge) described in 15118-2/-20. The methods described there simply handle payment externally to the whole electric vehicle to charging station interaction - these include (non-exhaustively) activation via a mobile app, use of a proprietary Radio Frequency Identification (RFID) card, and use of a physical payment card reader on the charging station.

Figure 2 describes an architecture for a card payment protocol for EV charging. This architecture is consistent with, but not limited to that to be addressed by the developing EMV standard, and adapts the existing charging infrastructure by inclusion of entities that enable a card payment to be made over this infrastructure.

Figure 2 shows the system 200 with the connections between an electric vehicle 202 and a charging station 204, where the electric vehicle 202 comprises an EV communication controller (EVCC) 206 and the charging station 204 comprises the supply equipment communication controller (SECC) 214. The EVCC 206 and the SECC 214 are the entities that implement the ISO 15118 specifications to enable the charging session.

The EV Charging Application (EVCA) 210 of the electric vehicle 202 is responsible for coordinating the charging session by, for example, managing the requested power and battery levels of the electric vehicle 202, as well as enabling the selection of the payment method that will be used for the charging session. The EVCA 210 is in communication with management systems of the electric vehicle 202 - here these are represented by the engine management system (EMS) 224, but in practice this may be any management system operating in the electric vehicle 202. The EVCA 210 also can interact with a user interface 226 - this is shown here as a system within the electric vehicle (for example, a dashboard user interface - this may then also interact with other management systems in the vehicle, though this is not explicitly shown in Figure 2), though it may also be an external user interface - for example, the EVCA 210 may be able to make a network connection to a user's mobile phone, where an app provides the user interface 226.

On the charging station 204 side, the SE charging application 216 assists the coordination of the charging session by ensuring that a valid payment method has been received before starting the charging session, and by communicating with the back-end systems of the charging station operator (CSO). The communication between the SE charging application 216 and the CSO's back-end systems may be implemented using a protocol such as the Open Charge Point Protocol (OCPP) defined by the Open Charge Alliance which enables the charging station 204 to communicate with a charging station management system (CSMS) 220. The CSMS 220 may then communicate with payment service provider (PSP) 222 for processing of a transaction - a PSP 222 is a standard role in a transaction processing system, and is not specific to EV charging systems.

What is described above is essentially as provided for the existing model for charging, and for payment for charging. In development towards an EMV standard, new elements for making a card payment over this infrastructure are provided, and will now be described.

As previously stated, the proposed EMV card Payment protocol for EV charging defines specifications to establish how a card payment can be made using the communication channel established for the 15118 communications. Although using the same physical communication channel, the messages for card payment, known here as the card payment protocol (CPP), flow in parallel with the 15118-2/-20 messages for managing the charging session. These fall within the broad definition of "an external method" for payment, and so are consistent with existing EV charging payment protocols.

Accordingly, to support card payment, the electric vehicle 202 and the charging station 204 comprise additional entities to implement the CPP - in this case, these are an EV EMV Payment module (EVEP) 212 and a card data source (CDS) 208 in the EV 202, and a SE EMV payment module (SEEP) 218 in the charging station 204.

The Card Data Source (CDS) 208 is the module which has access to the card applications. This can be achieved in a number of different ways: a card may be tokenised into the vehicle; the CDS 208 may be in communication with a connected device such as a mobile phone associated with a user of the vehicle; or there may be t a contactless reader in the EV which enables the user to tap a payment card to be read by the CDS 208.

The EV EMV payment module (EVEP) 212 is responsible for communicating with its corresponding module in the charging station, i.e., the SE EMV Payment module 218, as well as communicating with the EVCA 210 for selection of the payment that will be used to pay for the charging session. The set of "card" elements embodied in the EV 202 is thus slightly different from the card/wallet arrangement of a mobile phone used as a payment device.

The SE EMV Payment module (SEEP) 218 on the charging station 204 communicates with the EVEP 212 in the electric vehicle 202 using the CPP, and may also communicate with the SECA 216 to obtain transaction details (such as the cost of the transaction), as well as communicating with a payment service provider (PSP) 222 for card authorisation (either directly, or via the SECA 216 and CSMS 220).

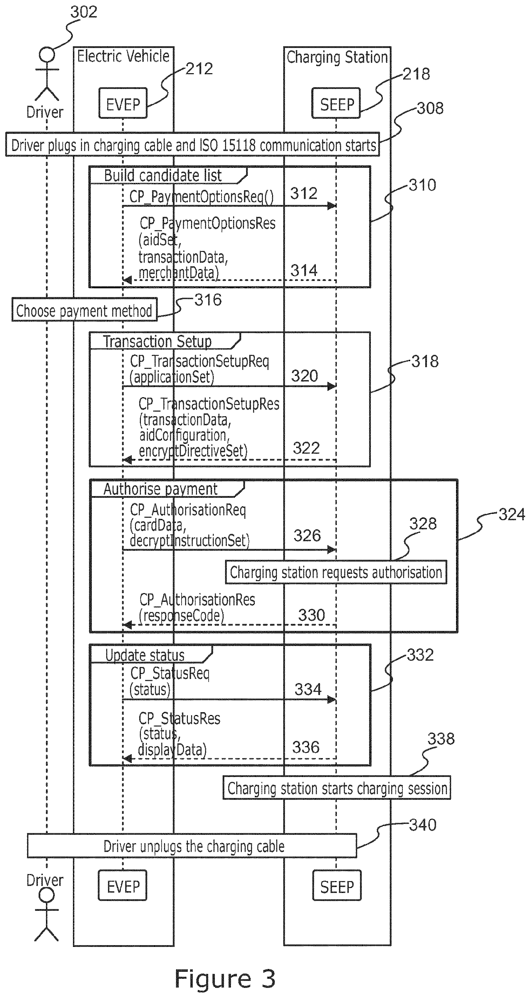

Figure 3 provides a flow diagram illustrating the steps of a card payment protocol for EV charging for use in the architecture of Figure 2. The embodiment shown is developed towards an EMV standard, but this is not a necessary limitation for such embodiments.

In this flow, shown in Figure 3, only the interactions between the EVEP 212 and SEEP 218 are positively defined. The transaction payment process illustrated comprises EV EMV Payment module (EVEP) 212 in the electric vehicle and a SE EMV Payment module (SEEP) 218 in the charging station. Once a driver 302 plugs the charging cable to the electric vehicle and the ISO 15118 communication is established 308 between the EVEP 212 and the SEEP 218, the process proceeds to setting up the payment by receiving at the SEEP 218 and from the EVEP 212 a request for card payment options (step 312) and in response to the card payment options request receiving at the EVEP 212 and from the SEEP 218 a response with card payment options, which may include transaction data and merchant data (step 314). At step 316, the driver 302 directly or indirectly (for example, according to a preestablished default) selects a payment method and the process proceeds to step 320, where the EVEP 212 sends a transaction setup request to the SEEP 218 and receives from the SEEP 218 a card payment transaction set up response comprising transaction data, application identifier (AID) configuration and any encryption requirements (step 322). The transaction payment process then proceeds to payment authorisation, where the EVEP 212 sends a card payment authorisation request to the SEEP 218, where the card payment authorisation request comprises necessary card data and any decryption instructions (step 326). The charging station then proceeds to requesting authorisation (step 328), where the SEEP 218 in response sends (step 330) a card payment authorisation response comprising a response code. The EVEP 212 then sends to the SEEP 218 a card payment status request (step 334) and receives from the SEEP 218 a card payment status response (step 336). The charging station then proceeds to starting the charging session (step 338). Once the charging session is finished, the session payment is completed and the driver 302 unplugs the charging cable (step 340). These stages largely mirror the stages of an existing EMV transaction - for example, that between a payment device such as a mobile telephone implemented for mobile payment and a POS terminal.

In embodiments of the disclosure, it is desired to go beyond the basic payment mechanisms described above to enable functionality associated with fleet cards. Before embodiments of the disclosure will be described, fleet cards and the special considerations associated with them will be discussed.

Fleet cards are widely used to allow fuel payments for vehicle "fleets" - for example, company car fleets - so that all costs associated with a vehicle such as a company car can be managed together. Fleet cards therefore have a specific functional purpose, and are often restricted in what goods and services may be purchased with these cards. This restriction may be at a product level, not simply the merchant level. For example, while fleet cards are primarily designed for fuel payments, there may be other goods which allowed to be purchased with the fleet card, such as automotive products (e.g., spare parts), or snacks. Other restrictions may, for example, include limiting the grades of fuel that may be purchased. All such features are defined as part of a fleet program. A fleet program which defines the business rules, including what may be purchased with the card, and what additional fleet data needs to be submitted in the authorisation request.

In existing implementations of fleet cards in EMV, fleet cards are identified through their AID. This is done through a PIX extension - this is an optional extension allocated by card schemes to differentiate between different applications provided by that scheme. When the transaction is to be initiated, the POS terminal identifies from the AID that the transaction is with a fuel card, and the transaction is handled accordingly. Restrictions on goods and services are enforced, and additional data is collected as required by the fleet program.

There are two primary methods for purchase restriction enforcement - host-based and card-based. In host-based purchase restrictions, product control is expected to be carried out online, and the authorization request includes various product codes, which identify vehicle products and services. For card-based purchase restriction, the card may have a set of categories personalised into it which modify the programme level restrictions, where the purchase restrictions may be stored in various data elements in the card. As an additional option, the merchant may support fleet spend control override capability, which allows the fleet level restrictions to be overcome, upon agreement from the issuer.

Fleet cards may request additional data be included with the authorisation or clearing data, for example the odometer reading or vehicle number. This data may be used for authorisation decisions or for fleet management. Data requirements may be specified at different levels, such as at the fleet programme level, where the programme is typically identified by the Application Identifier (AID) of the card, or at the card level, where the card is personalised with information on the data that is required in specific fields or tags.

The system, as illustrated in figure 2 may determine data that is mandatory, in which case the transaction should be rejected if the data is not present, or optional, in which case if the data is missing the transaction may still proceed.

The fleet card data is primarily collected either in-band or out of band. In band data collection refers to methods limited to prompts in tags defined within the card. Out of band data collection refers to manual entry on the merchant terminal - a main method of obtaining fleet data for conventional fleet cards - or through other interfaces such as integration with the forecourt or instore merchant systems, or by reading data from the vehicle via channels such as RFID or barcodes.

Therefore, the data requested to enable the payment transaction of the charging session may be populated from a range of different sources. This data may be personalised in the fleet card (e.g., through the tags within the Conexxus Specification) and read as part of the payment transaction, or it may be on a separate magstripe or chip card and entered by swiping, dipping or tapping the card on a reader attached to the fuel station. It may be driver or ancillary information manually entered at an interface of the charging station, or it may comprise vehicle sensor readings, also manually entered by the driver, or it may be obtained from merchant systems (e.g., to enter the fuel type).

This diversity of sources for fleet data makes it complex to develop any kind of automated solution. Some assistance is provided by Conexxus and IFSF specifications. Conexxus (https://www.conexxus.org/) and IFSF (International Forecourt Standards Forum - https://ifsf.org/) are industry bodies that have worked together to provide a specification to define how card-based purchase restrictions may be coded into the data file DF32 on an EMV card. For fleet data a further specification allows up to eight data prompts to be contained in the DF30 tag returned by the card during the EMV application selection process - this allows for data to be collected to be determined, along with permitted sources for that data. A merchant terminal reading tag DF30 will attempt to retrieve the data from the sources specified, and if that is unavailable, and if allowed, will prompt the user to manually enter the data on the merchant terminal. If DF30 specifies 'Chip card' as a device type, the merchant terminal will first attempt to read the data from the chip card in use before asking for another card to be presented.

While a reasonably effective system has thus been developed for physical cards, it requires considerable intervention. The merchant system is largely responsible for implementing the requirements of the program, with the card essentially just a source of instructions. The cardholder device - the card - has a limited user interface, and while certain data can be personalized to the card (for example, following the Conexxus/IFSF specifications), all other fleet management data must be collected out of band, typically through manual entry.

The present inventors have appreciated that a more effective system can be developed for implementing fleet cards - both for purchase restrictions and provision of fleet data - in a plug-and-charge infrastructure such as that illustrated in Figures 2 and 3 above. This will be described below in relation to embodiments of the disclosure.

The first step is to identify a fleet card in the context of EV charging. One method for identification of a fleet card used for payment of an electric vehicle charging session is identification of a fleet card by Application Identifier (AID). This may be done if an EMV card is provisioned to the EV with the functionality of an EMV Chip cards. Using that method, a fleet card may be identified through the AID in a manner defined by the payment system or other entity, in essentially similar manner to that used for physical fleet cards as indicated above.

However, in addition to this conventional method, the EV payment ecosystem allows for new methods of fleet card identification to be used. One novel method for identification of a fleet card in an EV is to use discretionary metadata. Using this approach, when a digital card is provisioned to an EV, there is an option of providing metadata related to the card into the card execution environment. Accordingly, it is possible to provide discretionary metadata which identifies the card as a fleet card, and may also identify the fleet program that the card is a part of. This fleet card metadata may be read by the fleet application running in the vehicle, providing a mechanism for a fleet application to recognize the specific requirements of the fleet program associated to the fleet card - this is described in greater detail below.

The coding of the data for recognition of the fleet program may be provided in a variety of different ways. For example, it may conform to an industry standard, be defined by a payment system, or be proprietary (for example defined by the provisioning system).

Implementation of purchase restrictions according to embodiments of the disclosure will now be described. In this implementation, the charging station operator (CSO) is responsible for ensuring that the purchase restrictions are respected. Consequently, the implementation of the EMV CPP needs to provide the mechanism for the restrictions to be implemented.

In contrast to the Conexxus use model - where there is a specific fallback where a merchant terminal cannot go online - for EV charging it can be assumed that the terminal is always online, and that purchase restrictions can always be applied.

As described above, for an EV, the information on the purchasing restrictions may come from the payment fleet card, from the fleet application (which can be accessed in EVCA), or default fleet program data (which can be provided at the merchant). Where it is possible for purchasing restrictions to be provided from more than one source, a priority order may need to be established - for example, if the card contains purchase restrictions, these may be defined as having highest priority and may be used first, followed by the fleet application (EVCA) purchase restrictions, and then followed by the default restrictions.

In some cases, purchase restrictions from each source may be combined. For example, the specifications may be defined such as to add additional restrictions on top of what was defined from another source, or removing restrictions that were defined by another source. For instance, a simple policy could be any product category allowed in the data from the card, the fleet application (EVCA) or the default data is allowed.

A combination of the previous two implementations may be used, where, for example, a priority order may be defined for each source, as well as for how to combine the restrictions between each source. As a non-limiting illustrative example, the priority may be defined in such a way that if the card provides purchase restrictions use these, else use the combination of purchase restrictions coming from the fleet application (EVCA) and the default.

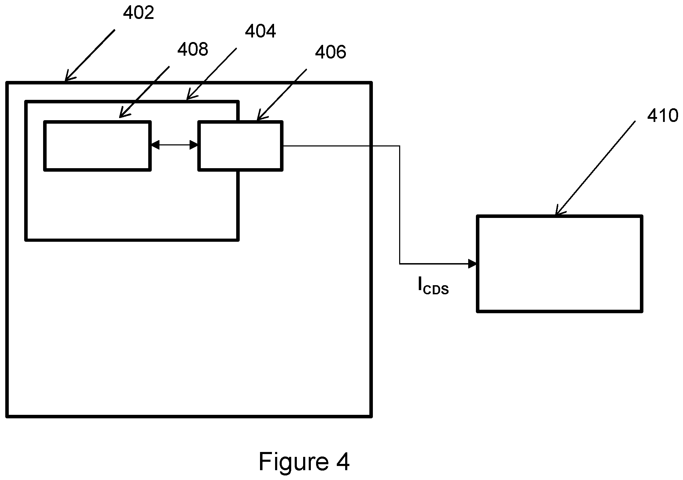

Figure 4 provides a schematic representation of implementation of provision of fleet card related information when the source is the fleet card. As discussed below, this applies to both purchasing restrictions and fleet card data.

When some or all of the purchasing restrictions are provided by the fleet card, the card data source 402 is responsible for providing card data to the EVEP 410 over the CDS interface (labelled I_{CDS}) for communication between the card data source 402 and the EVEP 410, the approach to this being shown in Figure 4. The card application 408 runs in a card execution environment 404 (this may be a smartcard based secure element, a trusted execution environment, or another software environment). A driver 406 is responsible for interacting with the card application 408 to format the card data and metadata to conform with the interface to the EVEP 410 (i.e., the I_{CDS}).

This driver 406 is defined in the proposed EMV scheme for plug-and-charge - it is part of an EV interface layer (EVIL) - but in embodiments of the disclosure this may be modified so that it also extracts purchase restrictions from the card application 408. Purchase restrictions may be personalized to the card application 408 in a similar manner to a physical EMV card, either using coding associated with a specific payment system, or using the DF32 field (as in the Conexxus specification) or by another approach (such as in a Track 2 equivalent field, in fields reserved for third party data, or in other metadata). The purchase restriction data from the card should then be sent from the card application 408 to the EVEP 410 at or by the time that the card authorisation data is generated (as illustrated in step 330 in Figure 3 above).

The driver 406 could extract purchase restrictions from the card application for example by reading DF32 (or data stored in a proprietary manner) band by converting it to a standardized format - preferably, a standardized format will be used by I_{CDS}.

Alternatively, purchasing restrictions may be provided by the EVCA. The EVCA may here identify the card provided by the driver 406 as a fleet card, for example using the discretionary metadata provided by the CDS to the EVEP 410. It should be noted that this is only one of several possible ways to identify a fleet card. This could also be done, for example, by using the existing EMV AID (Application Identifier) structure, which comprises RID (which identifies issuers of card products) and PIX (Proprietary Application Identifier Extension), which is used to identify specific products - PIX can be used to designate specific fleet card products. In this way, identification of a selected card as a fleet card can be determined by mechanisms primarily used in EMV for application selection.

The EVEP 410 then sends the metadata to the EVCA, as described above, where the discretionary metadata may further comprise purchase restriction data. These may come from a specific fleet program. Alternatively, these purchasing restrictions may be the result of a market agreed approach - purchase restrictions may then be generic within that market. Purchase restriction data may then be provided using a standardized format as in the Figure 4A case. In a further alternative implementation, the fleet card metadata may be loaded into the EVCA when the fleet card is provisioned to the EV. Additionally, or alternatively, the EVCA may be provisioned with a user interface that may be part of the electric vehicle (e.g., a dashboard user interface) to enable the driver 406 to manually enter fleet card information.

If a fleet card is selected for payment for a charging session, the EVCA sends its purchase restriction data to the EVEP at the time of selection. Alternatively, the driver 406 may prompt the data formatted as equipped for the fleet data for transmission over the CDS interface (labelled I_{CDS} in figure 4B). The purchase restriction data obtained from the card may follow an industry standard format such as defined by Conexxus, or an alternative, which would be preferred over a proprietary format, as described above in relation to Figure 4A.

For communication to the charging station, the EVEP may if necessary combine the purchase restriction data received from the CDS and the EVCA, and will then send any purchase restriction data with the card data to the SEEP when requesting transaction authorisation. Where combination is required, this may be by sending both the purchase restriction data received from the CDS and the purchase restriction data received from the EVCA as a set for processing by the charging station, or by the EVEP itself applying the applicability rules to merge the purchase restriction data received from the CDS and from the EVCA, and sending the merged data to the SEEP.

The approach shown in Figure 4 can also be used for implementation of fleet data collection from the card, this again being focused on the relationship between the fleet card and the EVEP in a way that is consistent with the developing EMV charging card payment protocol, CPP, as illustrated in Figures 2 and 3. This has various challenges, because of the distributed nature of the system, and of the variety of possible requirements. There are two essential issues in fleet data collection - the determination of what data needs to be collected, and the collection of the data itself. A challenge in determining what data needs to be collected is multiple sources - the card, the EVCA and the charging station - may each have information on the requirements of the fleet program, and therefore should be able to provide prompts for collection of that data. The data itself needs to be collected, and this may also be from multiple data sources. There may be overlap between sources of prompts and sources of data. Provision of prompts will be considered first, then provision of data, then data communication for fleet data according to an embodiment of the disclosure will be described.

For prompts originating from the card, the position is shown in Figure 4. As in the Conexxus specifications, fleet prompt data may be coded into the card in the card data source 402 using the DF30 field, or in other available parts of card data storage (track 2 equivalent data, third party data, etc. as before). This information is again passed to the driver 406, which ensures that it is formatted suitably for I_{CDS} - this may involve translation from a proprietary format to a standardised I_{CDS} format. Suitable data formats will be discussed further below. The set of requested data may then be returned when the EVEP checks the eligibility of the card - this can allow the EVCA to ensure that it has access to the required data before selecting the card for use in a transaction (for example, if a user sets the fleet card as a default card, the EVCA may request the user to enter certain data that the EV does not have access to at that point, rather than during the transaction, to ensure that the transaction can be performed). The card may also request prompt data at the time that the card generates card data.

Both the EVCA and the charging station (or merchant system) also need ways to add prompts. If the EVCA has identified a card as part of a fleet program, it, or a fleet application connected to the EVCA, may add data prompts required by the fleet program to the request list at the time of indicating to the EVEP that this card is selected. The charging station (or merchant) can add prompts when it is established that an application relating to a fleet card has been selected by inserting data elements into the list of required data elements.

There is even more flexibility required in the collection of data, as data may be required from a significant variety of sources:
- Data contained on the fleet card itself;
- Data derived from the EV, including any of the following
   ∘ Data collected by the EV (from EV systems, such as the odometer)
   ∘ Data entered by the user in the EV (for example, on a dashboard interface)
   ∘ Data obtained through connected applications
- Data obtained at the charging station, including any of the following
   ∘ Data added by the charging station itself
   ∘ Data added manually by the user at the charging station (through a suitable user interface)
   ∘ Data otherwise obtained out of band at the charging station (e.g. via RFID or barcode)
- Data from merchant systems
- Data obtained by the EVCA (typically not EV related), including any of the following
   ∘ Data obtained through connected applications which connect into the EVCA (e.g. a job management system in the EV)
   ∘ Data obtained through connected devices (e.g. a user mobile phone)

The mechanics of obtaining data from these different sources is briefly discussed below. An issue to be addressed is that data will need to be obtained from different sources at different times, including different stages of the overall transaction process.

For the card, certain data values may be provisioned directly into the card (DF40-57 may be used for this purpose in line with existing EMV specifications), but these may be held in other card-associated metadata. The card application (in the card data source) or the driver may then be responsible for ensuring that the data values are populated into the fleet data on I_{CDS}. Data may be obtained from the card at more than one time: the card may include the data values when the card metadata is requested from the CDS, or may include values when the card generates card data for an authorisation (this will be discussed further below in connection with sensitive fleet data, which will typically be provided from the card rather than from another data source).

For data obtained from the EV, this can depend on how the elements of the architecture of Figure 2 are implemented and connected to EV systems. An implementation of the EVEP may have access to data through the EV communication bus, from information provided by the EVCA, or from other configuration information. The EVEP may also be able to provide data at different stages in the process.

Where data needs to be collected from the user, this should be done where possible when the user selects the fleet card for use - including at the time of setting it as a default or in a prioritized list of cards. The data that needs to be collected can then be included in the metadata of the card.

The EVCA may have access to the requested data through connected fleet management applications, including those on connected mobile devices. When the card is selected for use in a particular transaction, the EVCA may populate the data elements it has available, and provides this to the EVEP when informing the EVEP of the selected card.

The charging station may populate requested data elements which have not been populated through out of band methods, such as RFID. If the charging station has a suitable user interface, the charging station may prompt for manual entry of data elements which have not been populated by alternative means. The charging station may make use of other entities within the charging station operator's system to populate the data. Other non-charging related entities in the system (e.g. automatic number plate recognition cameras to check parking times, vending machines associated with the charging station) may also provide data to a charging station or merchant system to be included here.

In order to support the range of sources for both data prompts and data elements, the following approach has been developed. This involves the provision of a suitable data structure for capturing all necessary information, and also of a suitable process to ensure that all necessary information is captured.

The data structure itself is developed to allow both requested data elements to be added and for populated values also to be added. This may be achieved in at least a couple of different ways:
The fleet data provided by the fleet card may consist of a list of requested data elements, where the data values are populated by the fleet card information, in addition to other sources. This may be implemented as a list of requested data elements, metadata, and values. Some of the values in the list may be initially set to "null", with the values inserted (or overwritten) by entities of the system which can populate specific values within the list.

Alternatively, the data may form two separate lists, where one list comprises requested data elements and metadata, and another list comprises populated data values and metadata. In this case, if an entity can populate a requested data value in the list of requested values, the entity removes the value from the request list and adds the corresponding value and metadata to the list of populated data values.

The data elements within the lists each have an associated identifier which is used by the entities involved in populating the data values. This identifier may be a name, or a coded value specified by the specific standard being used, such as, for example a developing EMV standard.

Common to both approaches is the provision not only of (requested) data elements and values for those data elements, but also metadata. Here, the metadata may be used to establish the rules associated with a data element - how it is collected, and how it is used.

The following are all metadata that may be associated with a data element:
- An indication of how the data element identifier is coded
- A prioritised list of data sources for the data element
   This may include whether manual entry of the data element is allowed
- If the data element is mandatory or optional
- Whether the data element value needs to be protected, or whether it may carried in the clear
- Usage information such as whether the data element should be included in a recei pt.

In embodiments of the disclosure, a key principle for handling fleet data is the following. The data structure provides a list of data elements to be prompted for, along with associated usage metadata (such as print on receipt, do not carry in the clear, device entry priority, whether the data is mandatory or optional, is manual entry allowed, etc) defining how that data element should be handled, along with space for values for each data element. This list, once generated, is passed between entities during the process of establishing and performing a charging transaction - in the transaction processing process described here, the list is passed between entities within the EV, the charging station, and in charging station operator systems. Each entity may add additional entries to the list, may populate a data value for a requested entry, or may overwrite an existing data value if its priority is higher than the previous source for that data.

With reference to the transaction payment process illustrated in figure 3, the fleet card data structure is created and initially populated during the initial stages of the transaction process. In the example illustrated in figure 3, the fleet card data structure may initially be created by the SEEP 218 (e.g., in step 314) and sent to the EVEP 212. However, the fleet card data structure may be created by other entities participating in the transaction payment process, such that if the fleet card data structure is not created by the SEEP 218 at the beginning of the transaction payment process, it may then be created by any other entity of the process, in any of the steps illustrated in figure 3, and be then sent along the transaction payment process. The EVEP 212 populates the fleet card data prior with all available EV-side information prior to sending the card payment authorization request (step 326 in figure 3). The SEEP 218 receives the current state of the fleet card data in this request and adds information prior to requesting authorization (step 328). A specific example of how this is integrated in a full transaction process will be described further below.

As indicated above, a data prompt may be mandatory or optional. If any mandatory data elements have not been provided and are not available when the charging station has finally populated the fleet data structure, this may be terminal for the transaction and lead to authorisation failure. One possibility is that the charging station operator may still attempt to submit an authorisation request through the payment system provider (PSP) - authorisation may then fail over the requirements of the fleet program not being met, or possibly some form of exception process could be triggered. Alternatively, the transaction may not even be submitted for authorisation, and a failure to authorise result could simply be returned in the authorisation response.

As indicated above, some of the fleet data requested may be sensitive data, such as personal identifiable information (PII). Generally, EMV card payment protocol specifications provide for the protection of sensitive card data, such as the Primary Account Number (PAN), when communicated from the card data source to the payment service provider, or to another entity in the charging station operator network. This is done by providing a set of encrypt directives in the card payment transaction set up response, as shown in step 322 of figure 3. These encrypt directives contain a public key to enable the sensitive data to be encrypted. As certain fleet data may be sensitive, this mechanism can be extended to encrypt this data before sending it to the SEEP 218. In addition, the encrypt directives may be extended to allow the fleet data to be encrypted to a different key than the sensitive card data. This may be done by explicitly sending a key for the fleet data, or simply adding a new encrypt directive. The fleet data may be sent to the PSP, which then includes the fleet card data in the authorisation request by encrypting both the fleet card data and the payment data with a PSP key.

Alternatively, the fleet card data may initially be sent to an entity other than the PSP, such as for example the charging station or other downstream systems. In this case, the fleet card data may be encrypted before being sent to the PSP using a fleet encryption key that is different from the PSP key. The charging station or downstream systems can then send the card data encrypted with the key for authorisation by the payment service provider, and the fleet card data, encrypted with the fleet data handler key to the fleet data handler.

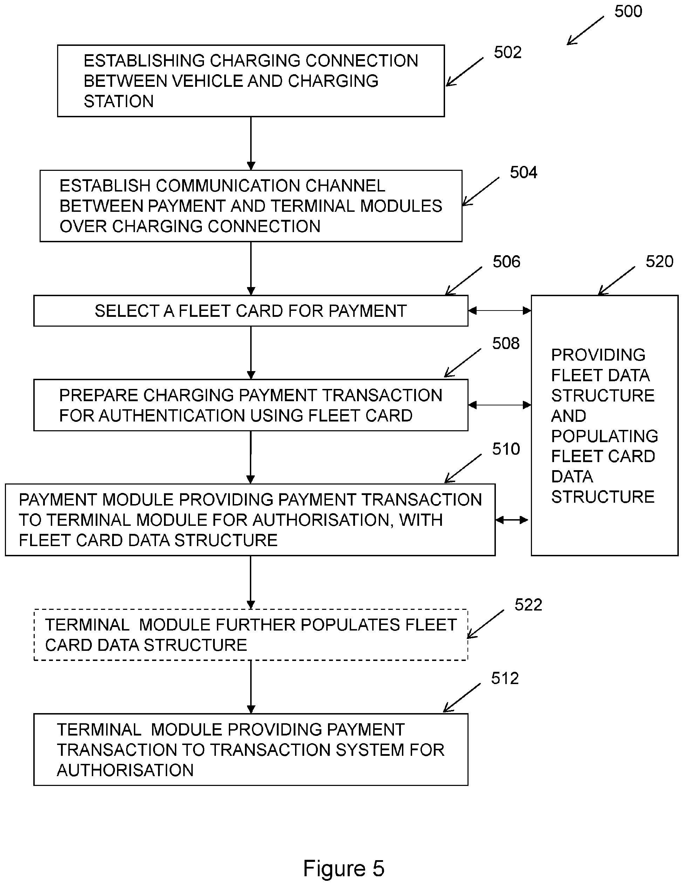

Figure 5 shows a method of payment for charging of a battery of a vehicle using the system illustrated in figure 2 and the process as described above in relation to Figures 3 and 4. Briefly, in a first step 502, the method 500 comprises establishing a charging connection between the vehicle and a charging station. In a second step 504, the method comprises establishing a communication channel between a vehicle payment module of the vehicle and a terminal module of the charging station over the charging connection. In a third step 506, the method 500 comprises selecting at the electric vehicle a fleet card for payment - it may have been first determined that selection of a fleet card was an option to have established this flow. In a fourth step 508, the method 500 comprises preparing a charging payment transaction for authentication. In a fifth step 510, the method 500 comprises providing, by the vehicle payment module, the charging payment transaction to the terminal module for authentication, at the same time providing a fleet data structure. The fleet card data structure holds a set of required data elements, and is also adapted to hold metadata for each of the required data elements and values for each of the required data elements. This fleet card data structure is provided and populated 520 at a plurality of transaction stages from a plurality of data sources. It may be further populated 522 at the charging station when the charging payment transaction is received for authorisation at the payment module. In a final step 512, the method 500 comprises providing, by the terminal module, the charging payment transaction with the fleet card data structure to a transaction system for authorisation. In embodiments of the disclosure, both the vehicle (through multiple modules) and the charging terminal are adapted to contribute to populating the fleet card metadata data structure.

The method 500 describes a method of a charging connection is established 300 between the charging station and the vehicle (step 502). This communication channel is established by implementing the ISO 15118 standard, with ISO 15118-3 defining the physical layer and the data link layer. As described above, the capabilities of the communication channel established can be extended is then used to enable establishment of the communication channel between a vehicle payment module of the vehicle and a terminal module of the charging station (step 504). This communication channel between the vehicle payment module of the vehicle and the terminal module of the charging station enable the communication of fleet management data and purchase restrictions associated with the use of a fleet card for payment of an electric vehicle charging session.

Thus, in step 506, when a fleet card is used for payment at the vehicle payment module the charging station may identify that the selected card consists of a fleet card through the Application Identifier (AID) associated with the fleet card.

Once the fleet card is identified for use, the vehicle payment module prepares metadata associated with the fleet card, which contain additional data that may be required for authentication of the transaction (step 508). The fleet card metadata data structure is provided (step 512) to the charging station and may be further developed or completed before the charging station requests authorisation of the transaction (step 514) from the relevant transaction processing system.

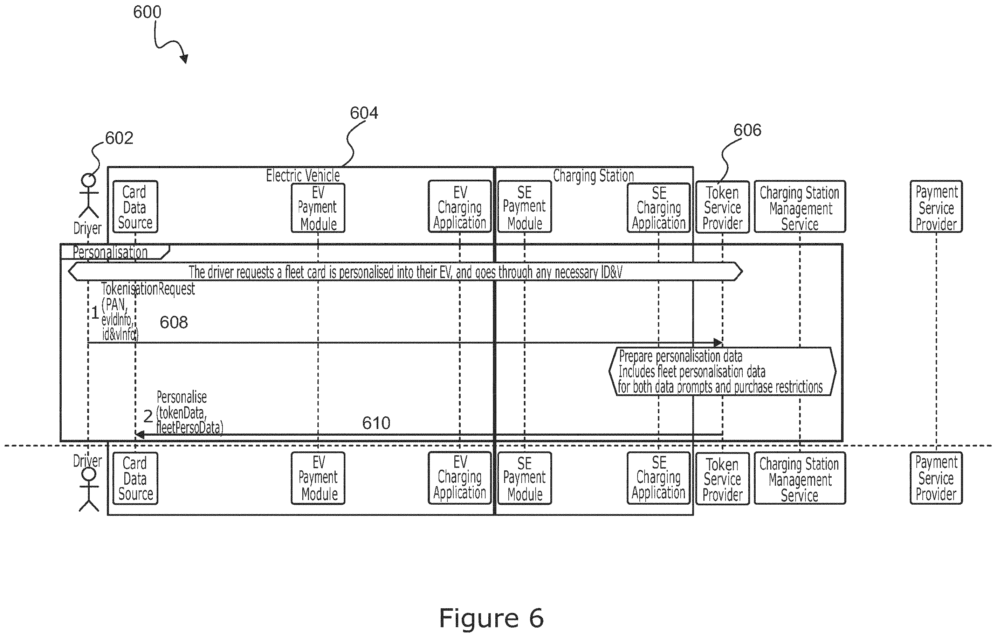

The process of provisioning an EV with a card may include the provisioning of fleet card data, where the card to be provisioned is a fleet card. Figure 6 provides a schematic flow diagram for provisioning of a fleet card to an EV. Here, the driver 602 of an EV 604 wishes a fleet card to be personalized to their vehicle. This request 608 is forwarded to a token service provider 606 (or a party interacting with the token service provider) - this may for example be brokered by the fleet card issuer. The tokenisation request is sent to the token service provider in a conventional manner so that tokenisation may take place (so, the token service provider is provided with the PAN and provides a token for the EV to use in place of the PAN). However, in addition to standard tokenisation-related data, fleet data (purchase restrictions, data prompts, data values, fleet program metadata) may be provided at the same time to be personalised into the card in the EV. At step 610, the token service provider sends the token data and also the personalised fleet card data to the card data source at the EV 604. Both sets of information are then held in the card data source - normal tokenisation allowing a conventional EMV transaction to take place, with the fleet card personalisation allowing additional requirements of a fleet card transaction to be established and consequently met. While the process shown in the Figure 6 uses EMV terminology, the skilled person will appreciate that this approach may also be applied to arrangements that do not comply with EMV standards.

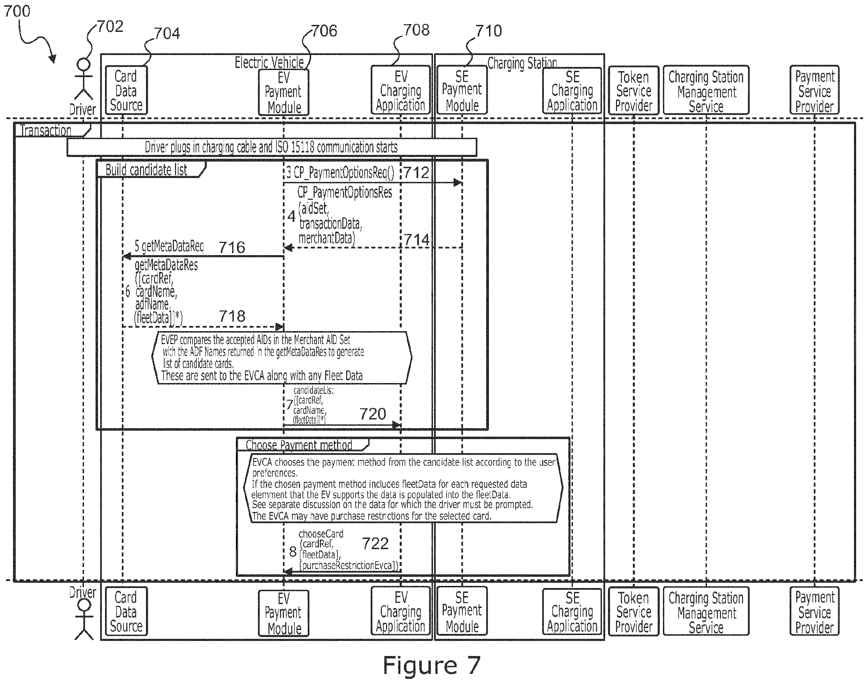

Figures 7 to 9 shows an exemplary schematic flow diagram for a plug-and-charge transaction in which a fleet card is used for payment. This provides an example indicating how use of fleet card metadata and purchase restrictions are integrated into the transaction flow.

Once the driver 702 plugs in the charging cable into the EV and the communication under ISO 15118 protocol between the electric vehicle and the charging station starts, the first stage of the transaction process 700 is to establish candidate cards for use in the transaction. This begins with a standard EMV interaction to determine what applications are supported by both the terminal (the SE payment module) and the card (here, represented by the EV payment module). At step 712 the EV payment module 706 sends a card payment options request to the SE payment module 710 of the charging station, which in returns sends to the EV payment module 706 a card payment options response (step 714) comprising a set of allowable AIDs (applications) and available transaction data and merchant data. Steps 712 and 714 correspond to steps 312 and 314 described above in relation to Figure 3. However, in addition to the flow described in figure 3 above, in step 716, the EV payment module 706 sends a request to the card data source 704 for metadata for the available cards (those that can be used for the transaction - excluding any for which there is no acceptable AID, for example), and receives from the card data source 704 in response to the request card metadata, which here includes the fleet card data (step 718). This may be provided in the form of a fleet card metadata data structure as described above, indicated as *fleetData* in Figure 7. At this point, the fleet card metadata data structure will generally not be complete, as the fleet card will typically not itself have all details of the fleet program - at this point, there may be certain prompts provided by the fleet card, and there may also be completed prompts for details held by the fleet card that are known to be required for the fleet program. At this stage of the process, the EVEP from the EV compares the accepted application identifiers (AID) received from the merchant with the card information received from the card data source at step 716 to determine what cards can be processed by the merchant and so generate a list of candidate cards that are eligible for the transaction.

The next step is to choose the payment method (step 316 in the generic payment flow of Figure 3). To do this, these candidate cards are sent to the EV charging application 708 along with the fleet card data (step 720). The EV charging application 708 chooses the payment method from the candidate list according to, for example, the driver 702 preferences (this may be predetermined, or prompted for) and, if the chosen payment method is the fleet card, the EV charging application will further populate the fleet card metadata data structure. This may be a significant point for development of the data structure, as fleet program rules may be largely held at the EV charging application level - consequently both new prompts and metadata associated with required elements will be common at this stage. Information obtainable from the EV itself may be provided through the EV charging application. The EV charging application will typically hold information for any purchasing restrictions to be placed on the fleet card, so these (shown as *purchaseRestrictionEvca*) will typically be added at this point. This selection is then sent to the EM payment module 706 (step 722). It is possible that more than one card may be selected at this point (for example, an alternate card may be provided in the case of transaction failure), in which case it is possible that details for more than one fleet card are returned at this point.

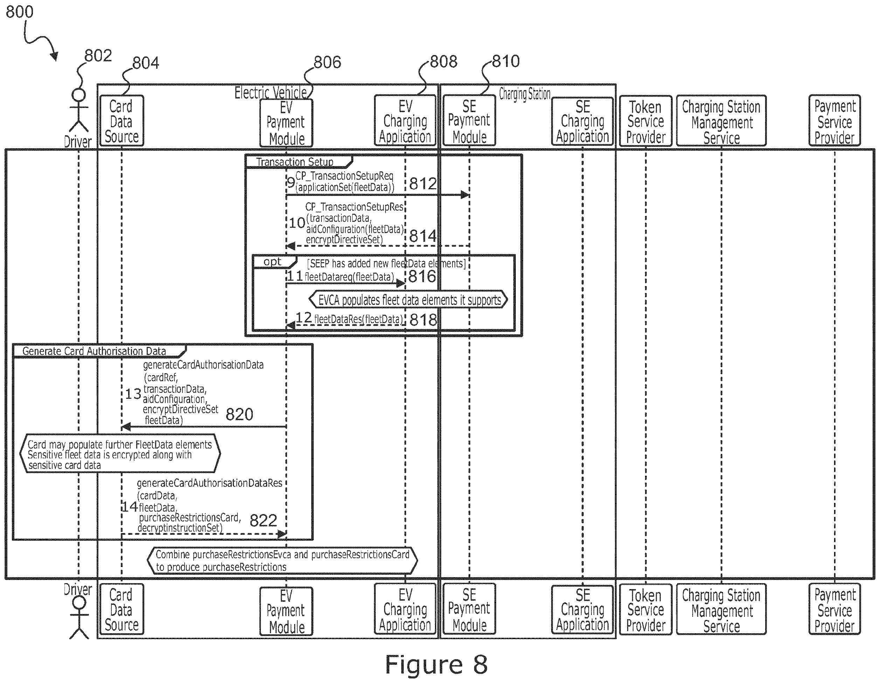

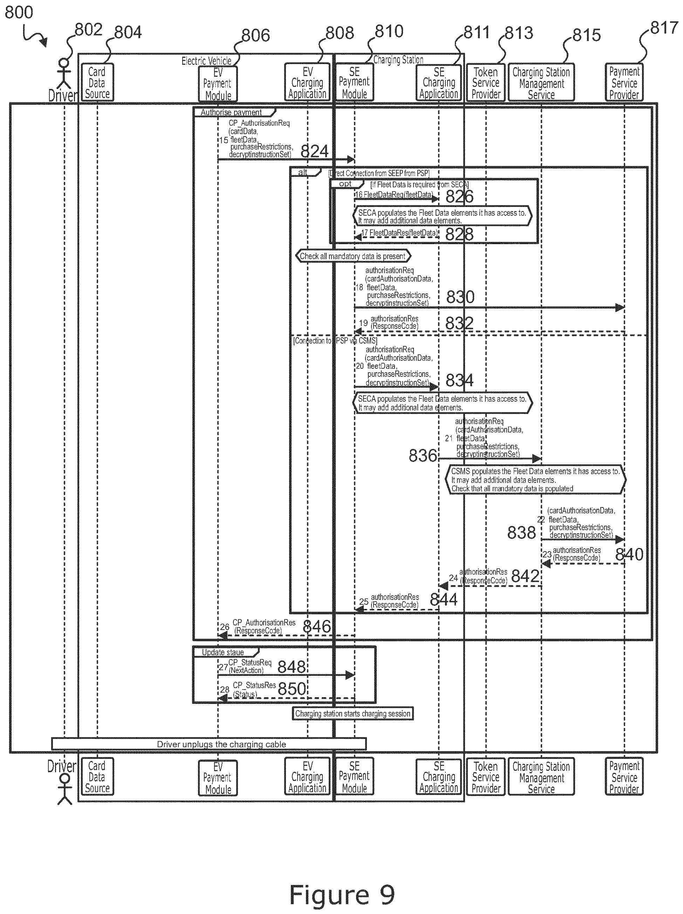

Figures 8 and 9 provide the continuation of the flow in Figure 7, where the transaction operation is set up and processed.

As shown in the flow 800 illustrated in figure 8, following step 722 illustrated in figure 7, the EV payment module 806 next begins the transaction setup operation (corresponding to stage 318 in Figure 3) for the card which has been chosen for the transaction (step 812). For each fleet card in the set of applications for which the transaction setup data is requested, the EV payment module 806 will include the fleet card metadata data structure (hereafter referred to as "fleet card data" for convenience), which is sent to the SE payment module 810. The SE payment module 810 responds by adding any additional fleet data that the charging station requires based on the fleet program in the configuration data for that application (step 814) - this may involve providing values for required elements, but may involve adding new metadata or new prompts requiring the collection of new data. If the SE payment module 810 has requested additional data, the EV payment module 806 may send this to the EV charging application 808 to populate, for example if the new required elements are information obtainable from EV systems, and the further populated fleet card data is then sent by the EV charging application 808 as a response to the EV payment module 806 (steps 816 and 818, respectively).

The transaction then moves to the payment authorisation stage (stage 324 in Figure 3). The EV payment module 806 requests the card data source 804 to generate card authorisation data for the transaction, as for a conventional EMV transaction. The current form of the fleet card data is also provided to the card data source at this point, together with any further directions (based on *encryptDirectiveSet*) on fleet card data that needs to be encrypted. The card data source 804 can then populate the fleet card data with any data elements which it has available and may encrypt any data elements in fleet data which need to be protected at the same time as it encrypts sensitive card data. The card data source 804 returns the card data required for authorisation, along with the fleet card data (which may include encrypted data elements), and any further purchase restrictions that may be stored in the card (step 822). The EV payment module 806 then combines the purchase restrictions provided by the card with those received from the from the EV charging application 808.

As shown in Figure 9, the EV payment module 806 begins the card authorisation process (stage 324 of Figure 3) by sending a card purchase authorisation request to the SE payment module 810. This request may be a standard EMV authorisation request, but will also contain the fleet card data and the combined purchase restrictions (step 824).

Figure 9 shows alternative options for the authorisation stage. If the SE payment module 810 has a direct connection to the payment service provider 817, it can pass the fleet card data to the SE charging application 811 for it to populate the data elements available in the charging station, and add any additional data elements, which are then sent back from the SE charging application 811 to the SE payment module 810 (steps 828 and 828, respectively). At this stage, there is not expected to be reversion back to the EV-side systems, so if additional data is required, it will typically be provided by the driver at the charging station. Alternatively, additionally information may be provided by the charging station or other downstream systems in the charging station management system. The purchase restrictions are sent to the payment service provider 817 as part of the authorisation request (step 830) after a check the presence of all mandatory data elements - most logically carried out by the SE payment module or associated systems - as discussed above.

Alternatively, when the connection between the SE payment module 810 and the payment service provider 817 is via the charging station management system 815, the SE payment module 810 will sent the authorisation request containing the fleet card data and purchase restrictions to the SE charging application 811 (step 834). The SE charging application 811 may populate any additional data elements it has access to, and optionally add further data elements. The SE charging application 811 then sends the authorisation request with the additional data elements to the charging station management system 815 (step 836), where the charging station management system 815 may also populate any fleet data elements it has access to - this may now take the role of checking that all mandatory data elements are populated. The charging station management system 815 then sends the authorisation request, including the fleet card data and purchase restrictions, to the payment service provider 817 for processing (step 838).

As shown in Figure 9, the process 800 continues in a conventional EMV manner - as shown in steps 840 through 850 the charging payment transaction is authorised (a positive result is illustrated for the purposes of illustrating the flow). Once the transaction is authorised, this allows to the charging session to start. The driver 802 can complete the charging session by unplugging the charging cable, once charging is completed.

Further modifications may be made to the above examples without departing from the scope of the present disclosure as defined in the accompanying claims.

## Claims

1. A method of payment for charging of a battery of a vehicle, the method comprising:
establishing a charging connection between the vehicle and a charging station;
establishing a communication channel between a vehicle payment module of the vehicle and a terminal module of the charging station over the charging connection;
selecting, at the vehicle, a fleet card for payment;
preparing a charging payment transaction, using the fleet card, for authentication;
providing, by the vehicle payment module, the charging payment transaction for authorisation to the terminal module of the charging station; and
providing, by the terminal module, the charging payment transaction to a transaction system for authorisation;
the method further comprising
identifying the selected card as a fleet card;
providing at the vehicle a fleet card data structure for the selected fleet card, the fleet card data structure comprising a set of required data elements, the fleet card data structure being adapted to hold metadata for each of the required data elements and values for each of the required data elements, and providing the fleet card data structure with the charging payment transaction to the transaction system for authorisation of the charging payment transaction; and
populating the fleet card data structure at a plurality of transaction stages from a plurality of data sources.

2. The method of claim 1, wherein populating the fleet card data structure comprises adding to the set of required data elements.

3. The method of claim 1 or claim 2, wherein populating the fleet card data structure comprises adding metadata for one or more required data elements, wherein said metadata comprises rules for collection or for use of required data element values.

4. The method of claim 3 where dependent on claim 2, wherein populating the fleet card data structure comprises, at a transaction stage, adding more than one of required data elements, metadata for required data elements, or required data element values to the fleet card data structure.

5. The method of any preceding claim, wherein the electric vehicle comprises a card data module holding card data for payment cards, and an electric vehicle charging application to control the electric vehicle charging process, wherein one or more of the card data module, the vehicle payment module, and the vehicle charging application populates the fleet card data structure for the transaction.

6. The method of claim 5, wherein the method comprises the vehicle payment module requesting card data for eligible payment cards from the card data module, wherein the fleet card is an eligible payment card, the electric vehicle charging application selecting the fleet card for payment from a set of eligible payment cards provided to the electric vehicle charging application by the vehicle payment module, wherein the method further comprises the card data module returning said card data and providing and/or populating the fleet card data structure for the fleet card to the vehicle payment module.

7. The method of claim 5 or claim 6, wherein the method further comprises the electric vehicle charging application populating the fleet card data structure on selection of the fleet card, wherein the electric vehicle charging application comprises or accesses fleet card rules for the selected fleet card, and wherein the electric vehicle charging application adds to the set of required elements, populates metadata for required data elements, or both according to the fleet card rules.

8. The method of any of claims 5 to 7, wherein the electric vehicle charging application communicates with an electric vehicle management system, wherein the electric vehicle charging application populates the fleet card data structure with data received from the electric vehicle management system.

9. The method of any of claims 5 to 8, wherein the fleet card rules further comprise purchase restrictions, and the electric vehicle charging application provides the fleet card rule purchase restrictions to the vehicle payment module.

10. The method of any preceding claim, wherein preparing the charging payment transaction for authentication comprises a transaction setup interaction between the vehicle payment module and the terminal module, wherein the vehicle payment module provides the fleet card data structure to the terminal module, and wherein the terminal module populates the fleet card data structure and provides the further populated fleet card data structure to the vehicle payment module.

11. The method of any preceding claim where dependent on claim 5, wherein before providing the charging payment transaction for authorisation to the terminal module of the charging station, the vehicle payment module requests card authorisation data for the fleet card from the card data module, and provides the fleet card data structure to the card data module with the request.

12. The method of claim 11, wherein on providing the card authorisation data for the fleet card, the card data module determines from required element metadata whether any required data element is to be encrypted, and if so, the card data module encrypts the relevant required data element and includes it in the fleet card data structure in encrypted form.

13. The method of any preceding claim, wherein on receiving the charging payment transaction from the vehicle payment module and before providing the charging payment transaction to the transaction system for authorisation, the charging station further populates the fleet card data structure.

14. A charging station for charging an electric vehicle, the charging station comprising:
a charging means adapted to establish a charging connection with a vehicle;
a terminal module adapted to communicate with a vehicle payment module of the vehicle over the charging connection, wherein the terminal module is configured to:
receive, from the vehicle payment module, a charging payment transaction for authorisation, wherein the charging payment transaction comprises a fleet card data structure having a set of required data elements for a selected fleet card, the fleet card data structure being adapted to hold metadata for each of the required data elements and values for each of the required data elements;
populate the fleet card data structure with one or more of the required data elements;
provide, the charging payment transaction and the fleet card data structure to a transaction system for authorisation.

15. An electric vehicle, the electric vehicle comprising:
a charging system for a battery of the electric vehicle, wherein the charging system is adapted to establish a charging connection with a charging station;
a vehicle payment module adapted to communicate with a terminal module of a charging station over the charging connection,
the electric vehicle being configured to:
select a card for payment and identify the card as a fleet card;
prepare a charging payment transaction using the fleet card for authentication;
populate fleet card data structure for the selected fleet card, the fleet card data structure comprising a set of required data elements, the fleet card data structure being adapted to hold metadata for each of the required data elements and values for each of the required data elements; and
provide, by the vehicle payment module, the charging payment transaction for authorisation to the terminal module of the charging station, wherein the fleet card data structure is provided to the terminal module with the charging payment transaction.
